(19) **Europäisches Patentamt / European Patent Office / Office européen des brevets**

(11) **EP 1 664 946 B1**

(12) **EUROPÄISCHE PATENTSCHRIFT**

(45) Veröffentlichungstag und Bekanntmachung des Hinweises auf die Patenterteilung:
**04.04.2012   Patentblatt 2012/14**

(21) Anmeldenummer: **04765189.8**

(22) Anmeldetag: **15.09.2004**

(51) Int Cl.:
*G05B 23/02* (2006.01)

(86) Internationale Anmeldenummer:
**PCT/EP2004/010275**

(87) Internationale Veröffentlichungsnummer:
**WO 2005/029206 (31.03.2005 Gazette 2005/13)**

(54) **VERFAHREN ZUR AUTOMATISCHEN ABLEITUNG VON INSTANDHALTUNGSEMPFEHLUNGEN**

METHOD FOR THE AUTOMATIC DERIVATION OF MAINTENANCE RECOMMENDATIONS

PROCEDE DE DEDUCTION AUTOMATIQUE DE RECOMMANDATIONS DE MAINTENANCE

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.09.2003   DE 10343265**

(43) Veröffentlichungstag der Anmeldung:
**07.06.2006   Patentblatt 2006/23**

(73) Patentinhaber: **AREVA NP GmbH**
**91052 Erlangen (DE)**

(72) Erfinder:
• **SCHRÖTER, Wilfried**
**91077 Dormitz (DE)**
• **SPREHE, Josef**
**90768 Erlangen (DE)**
• **MARSCHNER, Thomas**
**91325 Adelsdorf (DE)**

• **WÖFFEN, Manfred**
**41238 Mönchengladbach (DE)**
• **BLUME, Klaus-Peter**
**83043 Bad Aibling (DE)**
• **NIEDERMAYR, Erich**
**85598 Vaterstetten (DE)**
• **WEINRAUCH, Michael**
**64658 Fürth (DE)**
• **GRIEDL, Rainer**
**84028 Landshut (DE)**

(74) Vertreter: **Tergau & Walkenhorst**
**Patentanwälte - Rechtsanwälte**
**Eschersheimer Landstrasse 105-107**
**60322 Frankfurt/Main (DE)**

(56) Entgegenhaltungen:
**EP-A- 0 661 673     EP-A- 0 863 490**
**EP-A- 1 136 201     DE-A- 3 228 195**
**FR-A- 2 814 841**

**Beschreibung**

Die Erfindung betrifft ein Verfahren zur automatischen Ableitung von Instandhaltungsempfehlungen für eine technische Anlage oder ein technisches System (IH-Anlage) mit einer Anzahl von instandzuhaltenden Elementen (IH-Objekt) gemäß dem Oberbegriff des Anspruchs 1.

Die Instandhaltung technischer Anlagen oder Systeme erfolgt bisher ausfallorientiert, periodisch vorbeugend oder zustandsorientiert mittels einzelner, nicht verknüpfter Überwachungssysteme. Instandhaltungsentscheidungen können dabei auf der Grundlage von Instandhaltungsempfehlungen erfolgen, die der Nutzer bei der eigentlichen Entscheidung heranzieht. Die zur Generierung von Instandhaltungsempfehlungen relevanten Dokumente und Informationen liegen bei verschiedenen Unternehmen (Hersteller, Inbetriebnehmer, Betreiber, Instandhaltungsdienstleister) in unterschiedlichen Organisationseinheiten bei verschiedenen Bearbeitern. Sie sind dort meist unstrukturiert, isoliert und kontextunabhängig vorhanden. Viele Befund- und Reparaturberichte liegen nur in Papierform vor. Das Erfahrungswissen der Mitarbeiter ist nur unzureichend erfasst. Existierende Betriebsführungs-, Planungs- und Überwachungssysteme stehen oft nur als informationstechnische Insellösung oder als Papierdokumente bei Herstellern, Betreibern oder Dienstleistern zur Verfügung. Betriebsdaten aus dem Betrieb der Anlage stehen den Betriebspersonal zur Verfügung, werden aber nicht systematisch für die Instandhaltung genutzt. Diese Systeme können damit nur Teilinformationen für eine wissensbasierte Instandhaltung liefern. Das notwendige Wissen über Zustand und Zustandsbeurteilung ist so für Instandhaltungsentscheidungen oft nur unzureichend verfügbar.

Beispielsweise offenbart das Dokument EP 0 863 490 A ein Konzept zur Instandhaltungsplanung für Kraftfahrzeugkomponenten. Dabei wird eine Signalanzeige für einen "notwendigen Service" auf der Basis sensorisch erfasster Zustandswerte ermittelt. Die Notwendigkeit für einen Wartungsschritt (Fälligkeit) wird letztlich daraus abgeleitet, dass ein für die Alterung bzw. den Verschleiß charakteristischer, gemessener Betriebsparameter einen gesetzten bzw. voreingestellten Schwellwert überschreitet, der das Erreichen einer unteren Restlebensdauer signalisiert. Diese Vorgehensweise ist auch unter dem Schlagwort "Rest-Standzeitermitt-lung" bekannt.

Das Dokument EP 0661 673 A beschreibt für Fahrzeuge eine Möglichkeit zur Ableitung eines Datums für einen Wartungseinsatz (z. B. Ölwechsel) auf Basis bereits gespeicherter sowie neu aufgenommener Messwerte. Auch hier wird die zeitliche Entwicklung einer Abnutzungsgröße ermittelt, die mit Hilfe eines Referenzschwellwertes eine Aussage über den optimalen Wartungszeitpunkt erlaubt.

Nachteilig bei diesem bekannten Vorgehen ist jedoch, dass eine konsequente Übertragung von Instandhaltungserkenntnissen auf vergleichbare Objekte kaum stattfindet. Durch die verteilten Informationen ist eine systematische Nutzung der Daten und Informationen (Wissensmanagement) und damit eine automatische Ableitung von Instandhaltungsentscheidungen nicht oder nur schwer möglich.

Der Erfindung liegt daher die Aufgabe zugrunde, den Übergang von einer zustandsorientierten Instandhaltung zu einer wissensbasierten Instandhaltung zu unterstützen.

Diese Aufgabe wird erfindungsgemäß mit den Merkmalen des Anspruchs 1 gelöst.

Als Instandhaltungsentscheidungen werden dabei Instandhaltungsanforderungen und -empfehlungen und dergleichen zusammengefasst. Eine Instandhaltungsentscheidung basiert auf dem jeweiligen Instandhaltungsbedarf des betrachteten IH-Objektes.

Die Erfindung geht dabei von der Erkenntnis aus, dass die Instandhaltung bisher ausfallorientiert, periodisch vorbeugend oder zustandsorientiert erfolgt. Die dabei eingesetzten Überwachungssysteme sind nicht verknüpft und zielen stets nur auf einzelne Komponenten oder Teile der Anlage. Instandhaltungsrelevante Dokumente und Informationen finden sich bei verschiedenen Unternehmen und/oder Organisationseinheiten (Hersteller, Inbetriebnehmer, Betreiber, Instandhaltungsdienstleister, etc.) sowie bei unterschiedlichen Bearbeitern. Die Informationen sind dort meist unstrukturiert, isoliert und kontextunabhängig vorhanden. Viele Informationen, wie etwa Befund- und Reparaturberichte, liegen nur in Papierform vor. Erfahrungswissen der einzelnen Bearbeiter wird -wenn überhaupt - nur unzureichend erfasst. Bei existierenden Betriebsführungs-, Planungs- oder Überwachungssystemen handelt es sich häufig noch um Papierdokumente in Form von Regelwerken und dergleichen. Selbst bei softwaremäßigen Realisierungen solcher Systeme handelt es sich um Insellösungen, die nur dem jeweiligen Anwender, also z. B. dem Hersteller, Betreiber, etc., zur Verfügung stehen. Die von solchen Systemen verarbeitbaren Daten sind auf die dem Anwender direkt zugänglichen Daten beschränkt. Durch die räumlich und medial verteilten Informationen ist deren systematische Nutzung (Wissensmanagement) aktuell nicht oder nur schwer möglich. Betriebsdaten aus dem Betrieb einer Anlage stehen z. B. dem Betriebspersonal zur Verfügung. Eine systematische Nutzung solcher Daten für die Instandhaltung ist nicht bekannt. Die bekannten Systeme können damit nur Teilinformationen für eine systematisierte Instandhaltung liefern. Das notwendige Wissen über den Zustand einer Anlage und zur Beurteilung des Zustands derselben ist so für Instandhaltungsentscheidungen bisher nur unzureichend verfügbar.

Das erfindungsgemäße Verfahren baut demgegenüber in der Art einer wissensbasierten Instandhaltung auf einem strategischen Wissensmanagement auf. Es macht unter anderem vorhandenes Experten- oder Diagnosewissen für die Instandhaltung nutzbar. Hierbei wird vorhandenes Instandhaltungswissen für das jeweilige Instandhaltungsobjekt identifiziert (Wissensidentifikation) und durch einen Lernprozess aus gemachten Erfahrungen, Fehlern und Fehleinschätzungen für künftige und ähnliche Problemstellungen aufbereitet und,weiterentwickelt (Wissensentwicklung). Durch das Selektieren, Speichern und Aktualisieren wird das Wissen erhalten (Wissensbewahrung) und für die Nutzung zur Verfügung gestellt (Wissensnutzung). Vergleichbare Komponenten können identifiziert werden und das instandhaltungsrelevante Wissen übertragen werden (Wissensverteilung).

Alle relevanten Daten und Informationen für die Instandhaltung sind hierbei zu berücksichtigen, wie z. B.: Konfigurationsdaten, Betriebs- und Herstellervorschriften, Vorschriften aus Regelwerken, gemessene Zustandsdaten, visuelle Zustandsdaten, Betriebsdaten, Diagnoseempfehlungen, Befunddaten, Erfahrungswissen, Instandhaltungsberichte, Störungsmeldungen.

Der Vorteil der Erfindung besteht in der Optimierung der Entscheidungsprozesse in der Instandhaltung sowie in der Optimierung der Instandhaltung selbst. Dies erfolgt durch die systematische Erfassung und Nutzung des instandhaltungsrelevanten Wissens sowie durch die Bereitstellung sämtlicher zugehörigen Daten und Informationen. Bei Erhalt oder gar Erhöhung der Verfügbarkeit der jeweiligen Anlage können die Instandhaltungskosten reduziert und gleichzeitig Freiräume zur Optimierung der Instandhaltung geschaffen werden. Das Verfahren unterstützt den Übergang von einer ausfallorientierten, vorbeugend periodisch und/oder zustandsorientierten Instandhaltung zu einer wissensbasierten Instandhaltung.

Vorteilhafte Ausgestaltungen der Erfindung sind Gegenstand der Unteransprüche.

Bevorzugt wird für jedes IH-Objekt eine vorgebbare oder vorgegebene Anzahl von Einflussfaktoren berücksichtigt. Damit ist ein wiederkehrende Struktur zur Abbildung der Einflussfaktoren gegeben, die sich softwaremäßig besonders leicht als Feld realisieren lässt. Auf solche Felder ist ein zusammenfassender Zugriff möglich, so dass nicht jeder Einflussfaktor einzeln adressiert werden muss.

Wenn die Anzahl der Einflussfaktoren von einer Zugehörigkeit des IH-Objektes zu einer vorgebbaren oder vorgegebenen Kategorie bestimmt ist, ergeben sich wiederkehrende Strukturen wie zuvor beschrieben, die für eine Mehrzahl von IH-Objekten gleich ist. Dies erleichtert die softwaremäßige Handhabung der Einflussfaktoren nochmals erheblich.

Wenn durch die Kategorie des IH-Objektes auch die Art der Einflussfaktoren, insbesondere die Einflussfaktoren selbst, bestimmt ist, können zur Repräsentation sämtlicher Einflussfaktoren die, ausgehend von einer entsprechenden Klassifizierung, für eine bestimmte Gruppe von IH-Objekten relevant ist, Datentypen definiert werden, welche die bei der Behandlung und Verarbeitung der Einflussfaktoren insofern vereinfachen, als die bei heutigen Entwicklungsumgebungen zur Softwareerstellung zur Verfügung stehenden Mittel z. B. zur Typprüfung und dergleichen verwendbar sind, um Programmierfehler, also z. B. fehlerhafte Zuweisungen, zu vermeiden. Darüber hinaus wird mit einer festgelegten Menge von Einflussfaktoren eine Basis für eine Vergleichbarkeit der IH-Objekte sowie des aktuellen Zustands des IH-Objektes in Bezugs auf dessen Instandhaltungsbedarf gelegt.

Wenn der oder jeder Einflussfaktor anhand aus der IH-Anlage aufgenommener Zustandsdaten ermittelt wird, kann der Instandhaltungsbedarf aufgrund aktueller Daten ermittelt werden. Der Instandhaltungsbedarf kann z. B. auch periodisch, z. B. in einem vorgegebenen oder vorgebbaren Turnus, ermittelt werden, so dass aus den aufeinanderfolgenden Ergebnissen zum Instandhaltungsbedarf zum einen eine Instandhaltungshistorie ergibt oder ableiten lässt und dass sich aus der zeitlichen Änderung des Instandhaltungsbedarf zusätzliche Erkenntnisse zur Ableitung von Instandhaltungsentscheidungen gewinnen lassen.

Vorteilhaft wird der oder jeder Einflussfaktor anhand einer mittels einer Normierungstabelle vorgenommenen Normierung der aus der IH-Anlage aufgenommenen Zustandsdaten ermittelt. Dies ermöglicht zum einen auch die Verarbeitung nichtnumerischer Zustandsdaten, z. B. die alphanumerische Angabe eines eine Armatur durchströmenden Mediums ("Wasser"). Zum anderen wird durch die Normierung die Vergleichbarkeit der sich ergebenden Daten erleichtert.

Weiter vorteilhaft wird jeder Einflussfaktor oder jeder normierte Einflussfaktor mit einem dem jeweiligen Einflussfaktor zugeordneten, vorgegebenen oder vorgebbaren Gewichtungsfaktor beaufschlagt. Dies ermöglicht eine qualifizierte Berücksichtigung des Einflusses der dem jeweiligen Einflussfaktor zugrunde liegenden Einflüsse, also z. B. Betriebsart und Betriebsbedingungen, auf das jeweilige IH-Objekte. Hier liegt die Erkenntnis zugrunde, dass z. B. bei einer Armatur als IH-Objekt die Umgebung, in der die Armatur betrieben wird, einen geringeren Einfluss auf deren Instandhaltungsbedarf hat als z. B. das die Armatur durchströmende Medium.

Bevorzugt wird für jedes IH-Objekt oder für jede Kategorie von IH-Objekten eine der Anzahl der zugeordneten Einflussfaktoren entsprechende Anzahl von Gewichtungsfaktoren, insbesondere nach Art eines Vektors - Gewichtungsvektor $g$ - zusammengefasst, gespeichert. Hier ergibt sich der Vorteil zum einen aus der damit implizit festliegenden Zuordnung zwischen Einfluss- und Gewichtungsfaktor. Die zusammengefasste Speicherung sämtlicher Gewichtungsfaktoren in Form eines Gewichtungsvektors erleichtert wiederum deren softwaremäßige Handhabung, die entsprechend auch für die Gesamtheit der Einflussfaktoren für ein IH-Objekt gegeben ist, wenn diese, also jeder Einflussfaktor oder jeder normierte Einflussfaktor, nach Art eines Vektors - Bewertungsvektor $A$ - zusammengefasst gespeichert sind.

Die Zusammenfassung sämtlicher Einfluss- und Gewichtungsfaktoren für jeweils ein IH-Objekt in Form eines Vektors ermöglicht das Bilden mathematischer Verknüpfungen auf Basis dieser Daten. Besonders vorteilhaft wird dabei durch mathematische Verknüpfung des dem IH-Objekt aufgrund der zugrundeliegenden Zustandsdaten direkt zugeordneten Bewertungsvektors A mit dem dem IH-Objekt entweder direkt oder aufgrund dessen Zugehörigkeit zu einer bestimmten Kategorie von IH-Objekten zugeordneten Gewichtungsvektor $g$ ein Objekt-Anfälligkeits-Index (OAI) ermittelt.

Eine besonders einfach zu realisierende mathematische Verknüpfung, die sämtliche Einfluss- und Gewichtungsfaktoren berücksichtigt, ist gegeben, wenn die mathematische Verknüpfung in einer Skalarmultiplikation des Bewertungsvektors $A$ und des Gewichtungsvektor $g$ besteht.

Wenn anstelle des Gewichtungsvektors $g$ eine Gewichtungsmatrix $M$ verwendet wird, bei der die Werte des zugrunde liegenden Gewichtungsvektors $g$ in der Hauptdiagonale angeordnet und in der Nebendiagonale der Gewichtungsmatrix $M$ mindestens ein Koppelfaktor $k$ eingetragen wird, ist die Berücksichtigung von Abhängigkeiten einzelner Einflussfaktoren untereinander möglich. Wenn z. B. bei einer Armatur als IH-Objekt als Einflussfaktoren das die Armatur durchströmende Medium sowie das an der Armatur anstehende Druckgefälle betrachtet wird, können evtl. gegebene Abhängigkeiten dieser Einflussfaktoren auf den Instandhaltungsbedarf des IH-Objekts berücksichtigt werden. Die mathematische Verknüpfung zur Ermittlung des Objekt-Anfälligkeits-Indexes (OAI) besteht dann in einer Matrizenmultiplikation der Gewichtungsmatrix $M$ mit dem Bewertungsvektors $A$ und einer anschließenden Summation der Elemente einer sich dabei ergebenden Spaltenmatrix - Parameter-Anfälligkeits-Vektor $PA$.

Zur Ermittlung des Instandhaltungsbedarfs eines IH-Objektes wird erfindungsgemäß der ermittelte Objekt-Anfälligkeits-Index (OAI) in Relation zu einem dem jeweiligen IH-Objekt oder der jeweiligen Kategorie, zu der das IH-Objekt gehört, zugeordneten, vorgegebenen oder vorgebbaren Objekt-Vergleichs-Index (OVI) betrachtet. Damit ist eine Ableitung relativer Instandhaltungsentscheidungen möglich, d. h., die Instandhaltungsentscheidung basiert z. B. auf der Abweichung des den aktuellen Zustand des IH-Objektes repräsentierenden Objekt-Anfälligkeits-Index (OAI) vom Objekt-Vergleichs-Index (OVI). Eine vorteilhafte Möglichkeit der Ableitung einer Instandhaltungsentscheidung besteht darin, das Verhältnis von ermitteltem Objekt-Anfälligkeits-Index (OAI) und Objekt-Vergleichs-Index (OVI) zugrunde zu legen.

Wenn die Instandhaltungsentscheidung oder -empfehlung in einer Modifikation eines dem IH-Objekt zugeordneten Instandhaltungsplans anhand des Verhältnisses von Objekt-Anfälligkeits-Index (OAI) und Objekt-Vergleichs-Index (OVI) ermittelt wird, kann die automatische Ableitung von Instandhaltungsentscheidungen direkt in bestehende Systeme zur Instandhaltung integriert werden. Wenn z. B. in einem bestehenden System für ein bestimmtes IH-Objekt festgehalten ist, dass eine Wartung in einem Turnus von z. B. sechs Monaten erforderlich ist, kann der Wert von sechs Monaten in Abhängigkeit vom Verhältnis Objekt-Anfälligkeits-Index (OAI) und Objekt-Vergleichs-Index (OVI) verlängert oder verkürzt werden um zu einem Instandhaltungsturnus zu kommen, der optimal an den tatsächlichen Instandhaltungsbedarf des IH-Objektes angepasst ist.

Des Weiteren kann bei der Modifikation des Instandhaltungsplans ein Instandhaltungsbedarf des IH-Objektes anhand des Instandhaltungsplans vor der Modifikation berücksichtigt werden. Wenn also z. B. bei einem Instandhaltungsturnus von sechs Monaten zum Zeitpunkt der Ermittlung des Instandhaltungsbedarfs vier der sechs Monate bereits verstrichen sind, ergibt sich anhand des Instandhaltungsplans vor der Modifikation eine Instandhaltungsmaßnahme, ein Instandhaltungsbedarf, in zwei Monaten. Die Modifikation des Instandhaltungsbedarfs kann sich jetzt anstelle der sechs Monate auch auf die noch verbleibenden zwei Monate beziehen. Dies führt im Ergebnis zu einer nichtlinearen Anpassung des Instandhaltungsbedarfs. Mit anderen Worten: Wenn im normalen Turnus eine Instandhaltungsmaßnahme ansteht und keine unmittelbare Reaktion wegen besonderer Beanspruchung oder besonderer Anfälligkeit des IH-Objektes erforderlich ist, was an einem entsprechenden Verhältnis von Objekt-Anfälligkeits-Index (OAI) und Objekt-Vergleichs-Index (OVI) erkennbar wäre, wird der normale Turnus nicht oder nur minimal verändert.

Der Objekt-Vergleichs-Index (OVI) ist bevorzugt einem das IH-Objekt repräsentierenden Stammdatensatz oder einem eine Kategorie von IH-Objekten repräsentierenden Stammdatensatz zugeordnet. Damit ist eine jederzeitige eindeutige Zuordnung des Objekt-Vergleichs-Index (OVI) gewährleistet und ein leichter, softwaremäßig ggf. sogar durch eine Typprüfung oder durch Überwachung von Gültigkeitsgrenzen besonders sicher handhabbarer Zugriff auf das entsprechende Datum gewährleistet.

Aufgrund der erforderlichen Vernetzung der vielen Informationslieferanten und Nutzer ist das System zur Ausführung des Verfahrens vorteilhaft derart konzipiert, dass eine Nutzung über Internet möglich ist.

Weiter vorteilhaft ist das System zur Ausführung des Verfahrens modular aufgebaut, wobei den einzelnen Modulen spezifische Aufgaben zugeordnet sind.

Der Vorteil der Erfindung und ihrer Ausgestaltungen besteht damit insbesondere darin, dass eine systematische Erfassung und Nutzung des instandhaltungsrelevanten Wissens sowie die Bereitstellung aller Daten und Informationen ermöglicht wird, um den Entscheidungsprozess in der Instandhaltung sowie deren Durchführung zu optimieren. Bei Erhaltung oder Erhöhung der Verfügbarkeit und Sicherheit der Anlage können die Instandhaltungskosten reduziert und gleichzeitig Freiräume zur Optimierung der Instandhaltung geschaffen werden.

Dazu werden sämtliche für die Instandhaltung relevanten Daten und Informationen durchgängig, systematisch und strukturiert erfasst. Das erfasste Wissen wird für die Instandhaltungsplanung genutzt. Die für die Instandhaltungsplanung erforderlichen Informationen sind abrufbar und darstellbar. Aufgrund einer Analyse sowie einer Bewertung durchgeführter Instandhaltungsmaßnahmen ist eine Wissenserweiterung möglich. Für jedes bei der Instandhaltung zu untersuchende Anlagenteil, jede Systemkomponente, im folgenden als Instandhaltungsobjekt bezeichnet, wird individuell dessen relativer Instandhaltungsbedarf über einen Anfälligkeitsindex ermittelt. Das sich damit ergebenden objektspezifische Instandhaltungswissen steht aufgrund einer gezielten, systematischen Verteilung auch für andere Instandhaltungsentscheidungen zur Verfügung.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:

Fig. 1 schematisch ein einfaches technisches System als Beispiel für eine instandzuhaltende Anlage,

Fig. 2 eine Systemarchitektur eines Instandhaltungssystems als Vorrichtung zur Durchführung des Verfahrens,

Fig. 3 schematisch ein Verfahren zur Ermittlung eines Instandhaltungsbedarfs instandzuhaltender Komponenten eines technischen Systems,

Fig. 4 schematisch eine funktionsbezogene Klassifizierung instandzuhaltender Komponenten eines technischen Systems,

Fig. 5 eine Einflussparametertabelle zur Berücksichtigung verschiedener Einflussfaktoren auf den Instandhaltungsbedarf einer instandzuhaltenden Komponente,

Fig. 6 eine Normierungsskala zur Normierung von Einflussfaktoren,

Fig. 7 eine Anfälligkeitstabelle zur Ermittlung eines Maßes - Objekt-Anfälligkeits-Index (OAI) - für eine Ausfalls- oder Fehlfunktionsanfälligkeit und damit für den Instandhaltungsbedarf einer instandzuhaltenden Komponente,

Fig. 8 eine kumulierte graphische Darstellung einer Mehrzahl von Objekt-Anfälligkeits-Indizes (OAI) von instandzuhaltenden Komponenten, und

Fig. 9 eine auf einer Ableitung von Instandhaltungsmaßnahmen oder -entscheidungen basierende Bildschirmdarstellung, aus der sich der Instandhaltungsbedarf einzelner instandzuhaltender Komponenten ergibt.

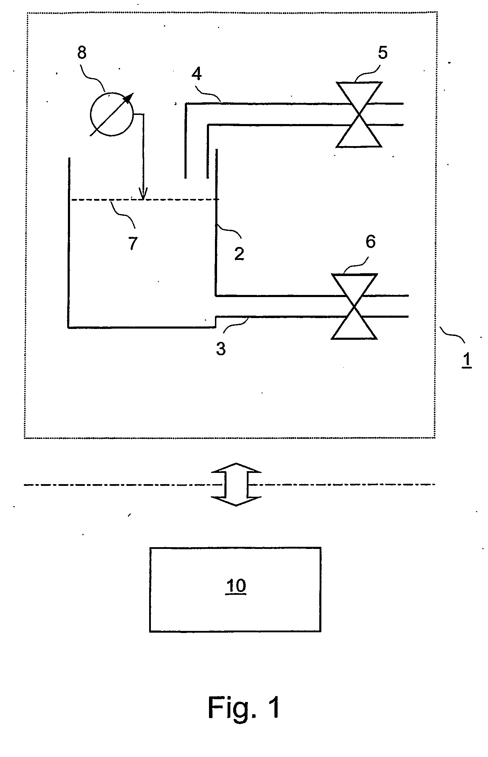

Fig. 1 zeigt schematisch ein einfaches technisches System 1 mit einem Behälter 2, der einen Ablauf 3 aufweist und durch einen Zulauf 4 gespeist wird. Zulauf und Ablauf sind durch jeweils ein Ventil 5, 6 steuerbar. In dem Behälter 2 befindet sich ein Flüssigkeitsspiegel 7, der durch einen Messwertaufnehmer 8 überwacht wird. Die einzelnen Elemente des technischen Systems 1, also zumindest Behälter 2, Ventil 5, 6 und Messwertaufnehmer 8, müssen, soweit sie einem Verschleiß, z. B. einem mechanischen oder chemischen Verschleiß durch den Betrieb und/oder einem mechanischen oder chemischen Verschleiß durch die Umgebung, unterliegen, untersucht und überwacht werden. Solche Elemente werden im folgenden als instandzuhaltende Objekte oder kurz als IH-Objekte bezeichnet. Das technische System 1 oder auch die technische Anlage wird entsprechend als instandzuhaltende Anlage oder kurz als IH-Anlage bezeichnet. Zur automatischen Ableitung von Instandhaltungsempfehlungen als Grundlage für Instandhaltungsentscheidungen oder -maßnahmen ist ein Instandhaltungssystem 10 vorgesehen, das kommunikativ mit dem technischen System 1 verknüpft ist, so dass z. B. eine Erfassung von Messwerten, die Aufschluss über den Zustand der einzelnen IH-Objekte geben, möglich ist.

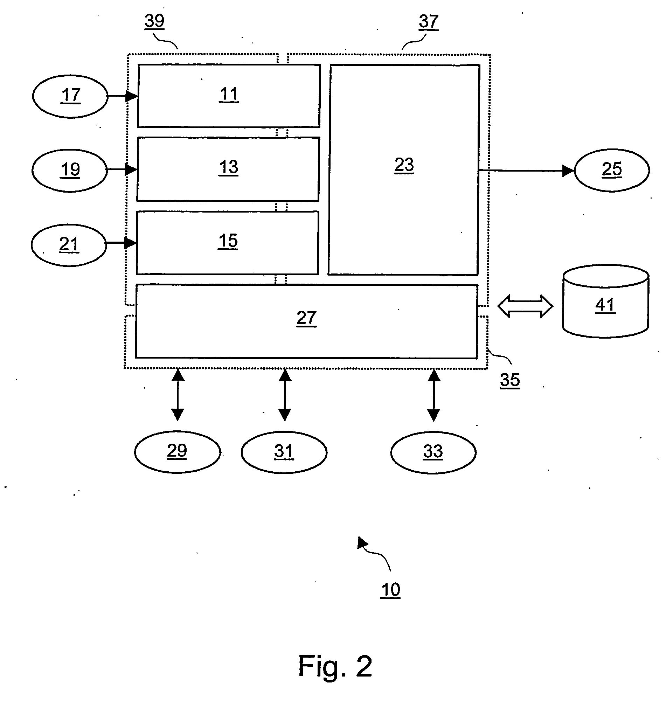

Fig. 2 zeigt schematisch eine Systemarchitektur des Instandhaltungssystems 10. Das Instandhaltungssystem 10 stellt eine Vorrichtung zur Durchführung des erfindungsgemäßen Verfahrens dar. Nachdem die Vorrichtung, um zur Durchführung des Verfahrens geeignet zu sein, naturgemäß auf das Verfahren abgestimmt ist, werden nachfolgend Vorrichtung und Verfahren parallel beschrieben.

Bei der Vorrichtung handelt es sich um einen Computer mit den üblichen, in Hardware ausgeführten Funktionseinheiten, also Prozessor, Speicher und dergleichen sowie Eingabe- und Anzeigegerät(en). Der Computer verfügt ggf. über Schnittstellen zur Anbindung desselben an ein Kommunikationsnetz, z. B. ein lokales Netzwerk oder das Internet, so dass auch von anderen, ggf. entfernt angeordneten Computern Daten übermittelt oder abgefragt werden können. Das erfindungsgemäße Verfahren ist softwaremäßig realisiert, so dass der Computer durch Einspielen der Software, die das erfindungsgemäße Verfahren realisiert, zu einer erfindungsgemäßen Vorrichtung wird. Die Software wird zur Anwendung des Verfahrens in einem Speicher des Computers abgelegt. Computer und Speicher selbst sind in Fig. 1 nicht dargestellt. Dargestellt ist dagegen eine schematische Darstellung des Inhalts des Speichers, die mit der Struktur des Software (Systemarchitektur) korrespondiert.

Danach umfasst die Software ein Regular-Modul 11 (R-Modul), ein Condition Based Maintenance-Modul 13 (CBM-Modul) und ein Befund-Modul 15 (B-Modul). Dem R-Modul 11 werden als R-Modul-Eingangsdaten 17 Vorschriften, Instandhaltungspläne oder ähnliches zugeführt. Dem CBM-Modul 13 werden als CBM-Modul-Eingangsdaten 19 gemessene Zustandsdaten oder ähnliches zugeführt. Dem B-Modul 15 werden als B-Modul-Eingangsdaten 21 visuell ermittelte Zustandsinformationen, Erfahrungen und Dokumente oder ähnliches zugeführt. Die Eingangsdaten 17, 19, 21 werden von einer Anlage, deren Instandhaltung mit der Software organisiert, überwacht und optimiert wird (Instandhaltungsanlage oder kurz IH-Anlage), geliefert. Die IH-Anlage selbst ist nicht dargestellt. Als IH-Anlage kommt grundsätzlich jede technische Anlage, z. B. ein Kraftwerk zur Energieerzeugung, oder auch einzelne Teilsysteme oder auch einzelne Instandhaltungsobjekte in Betracht. Eine technische Anlage umfasst üblicherweise eine Vielzahl einzelner Funktionseinheiten, Maschinen und Aggregate. Jedes dieser Elemente oder Komponenten wird im folgenden, soweit dessen Instandhaltung von der Software überwacht wird, als Instandhaltungsobjekt, oder kurz als IH-Objekt, bezeichnet.

Des Weiteren umfasst die Software ein Maintenance Decision Support-Modul 23 (MDS-Modul). Das MDS-Modul 23 generiert einzelne Instandhaltungs-Empfehlungen 25, die der Nutzer als Grundlage für (Instandhaltungs-) Entscheidungen heranzieht, sowie ein optimiertes Mengengerüst.

Schließlich umfasst die Software auch ein Wissensmanagementmodul 27 (WM-Modul), das einen insbesondere bidirektionalen Austausch von Daten mit Herstellern 29, Serviceprovidern 31 sowie weiteren Anlagen 33, insbesondere weiteren mit derselben Software überwachten IH-Anlagen, ermöglicht. Der Austausch von Daten mit Herstellern 29 ist sinnvoll, um z. B. neueste Erkenntnisse des Herstellers 29 über von ihm gelieferte IH-Objekte, also Komponenten der jeweiligen IH-Anlage, schnellstmöglich verwerten zu können. Für den Hersteller 29 ist der Zugriff auf die Daten der Software nützlich, weil er eigene Entwicklungsbemühungen auf eine Vermeidung von im Rahmen der Instandhaltung aufgetretenen Fehlern, Ausfällen oder dergleichen konzentrieren kann. Serviceprovider 31 sammeln instandhaltungsrelevante Daten und stellen sie zur Instandhaltung einzelner IH-Anlagen zur Verfügung. Für andere IH-Anlagen können Serviceprovider 31 z. B. im Austausch gegen gelieferte neue Daten auf die bisher zur Instandhaltung verwendeten Daten zugreifen um diese wieder an andere IH-Anlagen zu übermitteln. Weitere Anlagen 33, z. B. gleichartige Anlagen die ebenfalls vom Anwender der Software betrieben werden, können die jeweiligen instandhaltungsrelevanten Daten (IH-Daten) untereinander austauschen, so dass zumindest der Betreiber auch im Falle räumlich verteilter Anlagen bei allen Anlagen auf den gleichen Datenbestand zurückgreifen kann. Das WM-Modul 27 deckt damit schwerpunktmäßig die Funktionalität Wissenserweiterung 35 ab. Unter Wissenserweiterung 35 wird dabei auch das Speichern von Wissen (Wissensspeicherung) subsumiert. Das MDS-Modul 23 deckt schwerpunktmäßig die Funktionalität Wissensnutzung 37 ab. Unter Wissensnutzung 37 wird auch eine Instandhaltungsplanung subsumiert. R-Modul 11, CBM-Modul 13 und B-Modul 15 decken schwerpunktmäßig die Funktionalität Wissenserfassung 39, also Informations- und Dateneingabe, ab. Wie anhand der teilweise auch benachbarte Module erfassenden gestrichelt dargestellten "Funktionalitätsgrenzen" (Bezugsziffern 35, 37, 39) ersichtlich, ist die jeweilige Funktionalität nicht ausschließlich von den oben genannten Modulen zu leisten, so dass z. B. das WM-Modul 27 auch zur Wissenserfassung 39 und zur Wissensnutzung 37 beiträgt.

Zur Speicherung des IH-Wissens oder zur Auswertung von IH-Wissen, das von anderen Modulen entgegengenommen, abgespeichert, abgeleitet oder erweitert wurde, haben sämtliche Module 11, 13, 15, 23, 27 Zugriff auf eine Instandhaltungsdatenbank 41 (IH-Datenbank).

Die genannten Module 11, 13, 15, 23, 27 decken sämtliche Aspekte für eine wissensbasierte Instandhaltung und einer darauf basierenden automatischen Ableitung von Instandhaltungsempfehlungen ab.

Im R-Modul 11 werden die für die Instandhaltung relevanten unternehmensinternen und -externen Vorschriften, Handlungsanweisungen und Planungsvorgaben zusammengeführt und ausgewertet. Auch für IH-Objekte, die keiner gesetzlichen Vorschrift unterliegen, bestehen oft intern festgelegte Instandhaltungszyklen und Prüfanweisungen, die bei der Entscheidungsfindung zu berücksichtigen sind. Entsprechend können sämtliche Auswirkungen aus Vorschriften permanent aktualisiert und hinsichtlich ihres Einflusses auf Instandhaltungsentscheidungen analysiert und diese soweit erforderlich angepasst werden. Das R-Modul 11 ermittelt einen Instandhaltungstermin oder einen Instandhaltungsturnus anhand von Zeitintervallen, Betriebszeiten oder Schaltspielen. Das Zeitintervall wird über den Kalender ermittelt. Die Betriebszeit oder die Schaltspiele werden über eine definierte Schnittstelle von einer Betriebsdatenerfassung oder dergleichen eingekoppelt. Zum Beispiel wird anhand einer durchschnittlichen Betriebszeit oder einer durchschnittlichen Anzahl von Schaltspielen der voraussichtliche Instandhaltungstermin errechnet. Ein Schwerpunkt der Funktionalität des R-Moduls 11 liegt in der Ermittlung und Zusammenstellung aller vorgeschriebenen Arbeiten für das jeweilige IH-Objekt anhand von vorgeschriebenen Zeitintervallen und/oder Betriebszeiten für einen definierten Zeitraum.

Das CBM-Modul 13 kann Instandhaltungsempfehlungen aus einem vorgelagerten Diagnosesystem (nicht dargestellt) auswerten. Das CBM-Modul 13 kann aber auch als CBM-Eingangsdaten 19 übernommene Mess- und Analysedaten nutzen, um daraus Zustandswissen über das IH-Objekt zu entwickeln und Instandhaltungsempfehlungen oder -maßnahmen selbst abzuleiten. Im Ergebnis werden aus der Verarbeitung im CBM-Modul 13 die Instandhaltungsentscheidungen mit der Informationsquelle ausgegeben, welche sich aus einer Zustandsüberwachung der überwachten IH-Objekte ergeben.

Folgende Varianten können mit dem CBM-Modul 13 realisiert werden, um dem unterschiedlichen Grad einer Vorverarbeitung von Messdaten im Mess-/Diagnosesystem Rechnung zu tragen:

a) Über definierte Schnittstellen werden aus bestehenden Diagnosesystemen Diagnoseergebnisse und Instandhaltungsempfehlungen eingekoppelt.

b) Über definierte Schnittstellen werden aus bestehenden Diagnosesystemen Grenzwertüberschreitungen eingekoppelt. Das CBM-Modul 13 generiert Diagnoseergebnisse und Instandhaltungsempfehlungen selbst.

c) Aus mobilen Messdatenerfassungsanlagen werden Messwerte oder Abweichungen eingelesen. Das CBM-Modul 13 generiert Diagnose-Befunde und Instandhaltungsempfehlungen selbst.

d) Über definierte Schnittstellen werden aus bestehenden Messanlagen Mess- oder Grenzwert-Signale eingekoppelt. Das CBM-Modul 13 generiert Diagnose-Befunde und Instandhaltungsempfehlungen selbst.

Mit dem Befund-Modul 15 wird mit den B-Modul-Eingangsdaten 21 instandhaltungsrelevantes Wissen übernommen und anschließend ausgewertet, das im Rahmen der Durchführung eingeplanter oder ad hoc ausgeführter Inspektions-, Wartungs- und Instandsetzungsmaßnahmen bekannt wurde. Eine Eingabe der sich dabei ergebenden Befunde wird über zum Teil für die Tätigkeitsart spezifische Eingabemasken angeleitet. Die Wissensbasis wird so um das Erfahrungswissen, das ein mit der Instandhaltung betrauter Mitarbeiter bei der technischen Arbeit am Instandhaltungsobjekt gewinnt, erweitert. Im Rahmen der Befundeingabe können Instandhaltungsdokumente als Dateianlagen der Auftragsdokumentation beigefügt werden. Eine Befundauswertung findet nicht nur für das betroffene IH-Objekt selbst statt. Neue Erkenntnisse werden auch auf ähnlich zu beurteilende IH-Objekte übertragen.

Das B-Modul 15 wird unterstützt von Informationsfunktionen des WM-Moduls 27, welches sowohl über den aktuellen Instandhaltungsauftrag wie auch über die Instandhaltungshistorie des IH-Objektes detailliert Auskunft erteilt. Zur direkten Optimierung der Instandhaltungsplanung im MDS-Modul 23 kann der den Befund eingebende Bearbeiter Stellung nehmen zur Richtigkeit der den Auftrag veranlassenden Diagnose, Zustandsinformationen liefern, Instandhaltungsmaßnahmen empfehlen und für jedes IH-Objekt mittels einer Logbuch-Funktion Hinweise verschiedener Kategorien zur weiteren Beachtung festhalten.

Für diese Aufgabenstellung nimmt das B-Modul 15 die folgenden Informationsarten auf:

- vorgefundene Situation und durchgeführte Arbeiten,
- pauschale Bewertung des angetroffenen Objektzustandes,
- strukturierte Erfassung von Verschleiß, Schäden und Ursachen,
- Diagnosewahrheit,
- quantifizierte Erfassung von Zustandsindikatoren zur Prognose des Instandhaltungsbedarfes,
- neues Erfahrungswissen mit Markierung zur Nachverfolgung im WM-Modul 27 für eine verbesserte Ermittlung des Instandhaltungsbedarfes,
- Ergebnisdokumente für tätigkeitsspezifische Informationen,
- wichtige Hinweise zur Führung der Historie eines IH-Objektes.

Das Maintenance-Decision-Support-Modul 23 stellt die zentrale Bedieneinheit für die Person, die für Planung der Instandhaltung verantwortlich ist (Instandhaltungsplaner, IH-Planer), dar. Mit dem MDS-Modul 23 wird das in einzelnen Instandhaltungsprozessen erfasste Wissen zusammengefasst dargestellt und im Rahmen der Instandhaltungsplanung genutzt. Das MDS-Modul 23 dient der Analyse, Integration und Verarbeitung der von den anderen Modulen 11, 13, 15, 27 bereitgestellten Informationen. Die drei vorgelagerten Module 11, 13, 15 liefern ihre jeweiligen Instandhaltungsempfehlungen, Einschätzungen über den Zustand und den Instandhaltungsbedarf der IH-Objekte. Diese werden zusammen mit den dazugehörigen Informationen entweder direkt oder aus der IH-Datenbank 41 zur weiteren Bearbeitung, Optimierung und Entscheidung an das MDS-Modul 23 weitergeleitet und in Form einer klar strukturierten Planungsübersicht dargestellt.

Um die Planungsanforderungen auch für komplexe Großanlagen gezielt auf die betreffenden Bereiche zu fokussieren, stehen dem Instandhaltungsplaner verschiedenartige Werkzeuge zur Verfügung, die eng mit der Funktionalität des WM-Moduls 27 und der IH-Datenbank 41 verknüpft sind.

In einem ersten Schritt kann der IH-Planer insbesondere folgende Randbedingungen festlegen:

- Objekt-Verantwortlichkeit anhand einer Benutzerverwaltung,
- Einschränkung eines Beobachtungszeitraumes zur Planung von Revisionen,
- Einschränkung der IH-Planung auf ausgewählte IH-Objekte bzw. Eigenschaften dieser IH-Objekte.

In einem zweiten Schritt kann der IH-Planer über Detailansichten die erforderlichen Informationen zum Instandhaltungsbedarf eines selektierten IH-Objektes aufrufen. Eine besonders übersichtliche und umfassende Darstellungsvariante stellt die Planungsübersicht in alphanumerischer und/oder graphischer Form dar. Diese beinhaltet alle für die Instandhaltung wichtigen Stammdaten, alle Instandhaltungsempfehlungen aus den drei Eingangsmodulen 11, 13, 15 mit den erforderlichen Informationen für die Instandhaltungsplanung einschließlich der IH-Historie, sowie einen Ähnlichkeitsvergleich.

In einem Kopffeld der Planungsübersicht werden alphanumerische Stammdaten des IH-Objekts eingeblendet. In einem Auftragsfeld werden aktuelle und in der Vergangenheit ausgeführte Instandhaltungsaufträge eingeblendet. Das Auftragsfeld ist in einen Textbereich und einen Grafikbereich unterteilt. Im Grafikbereich wird ein Termindiagramm graphisch dargestellt. Damit steht dem Anwender, also insbesondere dem IH-Planer, die Instandhaltungshistorie zur Verfügung, die bei der Entscheidung und Planung zu berücksichtigen ist. Um die Übersichtlichkeit zu steigern, werden detaillierte Empfehlungen aussagekräftigen Auftragskategorien zugeordnet. Über eine Farbcodierung ähnlich einer Ampel (Ampelaussage) werden besondere Ereignisse (z. B. ROT: Alarmgrenze überschritten, Sofortmaßnahme notwendig) in Bezug auf das IH-Objekt schnell und transparent angezeigt, so dass gezielte Abhilfemaßnahmen eingeleitet werden können.

Im einem für Instandhaltungsanforderungen vorgesehenen Feld der Planungsübersicht werden die Instandhaltungsempfehlungen aus den einzelnen Eingangsmodulen 11, 13, 15 angezeigt. Auch dieses Feld ist in einen Text- und einen Grafikbereich unterteilt. Im Grafikbereich wird ein Termindiagramm dargestellt. Hier kann sich der Anwender über die vorgeschlagenen Empfehlungen und die zugrundeliegenden Ursachen detailliert informieren, über einzelne Maßnahmen entscheiden und die Instandhaltung planen. Dazu zählen unter anderem Maßnahmen wie: Empfehlungen anderen Aufträgen zuordnen, Empfehlungen stornieren oder zurückstellen, etc.

Abschließend wird ein Instandhaltungsauftrag (IH-Auftrag) mit einer Instandhaltungsempfehlung, -entscheidung oder -maßnahme generiert und zur Durchführung freigeben oder als Arbeitsauftrag ausgedruckt.

Im einem Feld "Ähnlichkeitsvergleich" werden dem IH-Planer für die Instandhaltungsprognose vergleichbare Komponenten, also IH-Objekte, angezeigt. Es ist ebenfalls in einen Text- und Grafikbereich unterteilt. Im Grafikbereich wird wiederum ein Termindiagramm graphisch dargestellt. Im Textbereich werden die Anzahl der selektierten Komponenten und im Termindiagramm die Durchführungstermine aufgrund der Dringlichkeit oder der turnusmäßigen Instandhaltung eingeblendet. Eine Selektion erfolgt über einen im WM-Modul 27 abgeleiteten und den Stammdaten des jeweiligen IH-Objektes zugeordneten Vergleichsindex, den weiter unten näher erläuterten Objekt-Vergleichs-Index (OVI). Damit wird das Instandhaltungswissen vom derzeit in Planung befindlichen IH-Objekt auf gleichartige IH-Objekte übertragen (Wissenstransfer), um so optimale Instandhaltungsmaßnahmen anzustreben und Schäden vorzubeugen und zu vermeiden.

Die Darstellung prognostizierter Instandhaltungstermine (IH-Termine) basiert auf Ergebnissen der Befundanalyse im B-Modul 15 und gliedert sich je nach IH-Objekt in zumindest folgende drei Gruppen:

- Einzelkomponente:

    prognostizierter IH-Termin des angezeigten IH-Objektes selbst

- Redundanzgruppe:

    prognostizierter minimaler, mittlerer und maximaler IH-Termin der Gruppe von IH-Objekten, welche zur selben Redundanzgruppe gehören wie das angezeigte IH-Objekt,

- Standardähnlichkeitsgruppe:

    prognostizierter minimaler, mittlerer und maximaler IH-Termin der Gruppe von IH-Objekten, welche denselben Vergleichsindex aufweisen wie das angezeigte IH-Objekt.

Hat der IH-Planer die Bearbeitung der IH-Empfehlungen für das betrachtete IH-Objekt abgeschlossen und den IH-Bedarf organisiert, so kann der IH-Umfang auf andere vergleichbare IH-Objekte übertragen werden.

Im Wissensmanagement-Modul 27 werden zentrale Wissensmanagementfunktionen bereitgestellt, die allen anderen Modulen 11, 13, 15, 23 zur Verfügung stehen. Dies umfasst Analyse-, Typisierungs- und Suchfunktionen, aber auch das komplette Daten-, Dokumenten- und Historienmanagement. Die Einbeziehung von Informationen weiterer Anlagenbetreiber 33, Hersteller 29 und Instandhaltungsdienstleister sowie Serviceprovider 31 wird dabei datentechnisch durchgängig unterstützt. Insbesondere hierdurch werden vergleichende Analysen und fundierte statistische Auswertungen ermöglicht.

Zur Sicherstellung einer anlagenübergreifenden Vergleichbarkeit bei der Bewertung instandhaltungsrelevanter Informationen wie bei der Generierung von IH-Prognosen oder IH-Anweisungen wurde ein Verfahren zur Klassifizierung und Bewertung der IH-Objekte entwickelt. Die damit realisierte Klassifizierungs- und Prognosefunktion verwendet einen standardisierten Objekt-Anfälligkeits-Index (OAI) und einen Objekt-Vergleichs-Index (OVI). Diese geben vergleichende Auskunft über Bauart, Einsatz und Umfeld oder sonstige, den Instandhaltungsbedarf eines IH-Objektes beeinflussende Faktoren und ermöglichen dadurch den zu erwarteten Instandhaltungsbedarf abzuschätzen bzw. Priorisierungen bei

den Instandhaltungtätigkeiten vorzunehmen. Details zur Berechnung und Nutzung der o. g. Indizes werden nachfolgend erläutert. Die Prognosefunktionalität kann vorteilhaft im B-Modul 15 und/oder im MDS-Modul 23 zur Terminempfehlung genutzt werden.

Eine weitere wichtige Bewertungsfunktion des WM-Moduls 27 besteht in einer Unterstützung bei einer Nachverfolgung und Analyse von festgestellten Auffälligkeiten (Abweichungen vom prognostizierten Instandhaltungsbedarf). Dies gelingt durch interaktive Entscheidungsregeln, geeignete Filterfunktionen und Teilindizes (Anfälligkeitsindex je Beanspruchungsgruppe), sowie die durchgängige datentechnische Bereitstellung von typischen Befunden, Bildern und objektspezifischer Lebenslaufinformation. Diese Entscheidungslogik unterstützt eine definierte Unterscheidung und Bewertung der vorgefundenen Situation, z. B.

- Serienfehler, z. B. neues Schadensbild festgestellt,
- Exemplarfehler, z. B. vorausgegangener Montagefehler,
- ereignisbedingter Fehler, z. B. vorausgegangene Überlastung sowie eine adäquate Entscheidung bzgl. erforderlicher Folge- und Verbesserungsmaßnahmen.

Damit kann eine wichtige Aufgabe in der Instandhaltung, nämlich die kontinuierliche Verbesserung sowie der Ausbau des vorhandenen Instandhaltungswissens (Wissenserweiterung), wesentlich unterstützt werden.

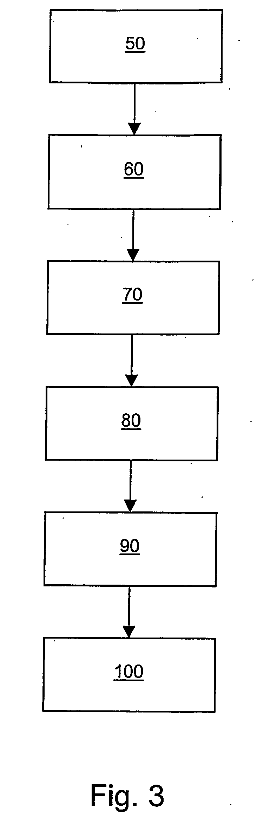

Fig. 3 zeigt schematisch ein Verfahren zur Ermittlung des Instandhaltungsbedarfs eines oder mehrerer IH-Objekte auf der Basis des Objekt-Anfälligkeits-Indexes (OAI).

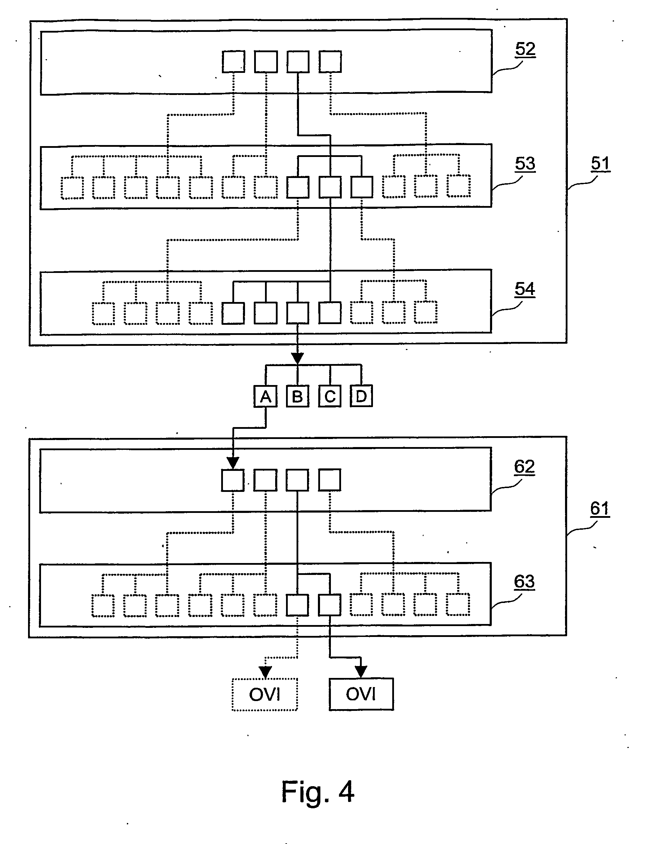

Fig. 3 zeigt eine schematische Darstellung der dabei betrachteten IH-Objekte sowie der berücksichtigten Daten. Aufgrund der Parallelität der Darstellungen in Fig. 3 und Fig. 4 bezieht sich die nachfolgende Beschreibung zunächst gleichzeitig sowohl auf Fig. 3 wie auch auf Fig. 4.

In einem ersten Schritt 50 (Fig. 3) werden aus den betrachteten IH-Objekten funktions- und/oder bauartbezogene Gruppen gebildet. Für eine solche funktionsbezogene Klassifizierung 51 (Fig. 4) bei Armaturen als exemplarischen IH-Objekten werden z. B. Kriterien wie Funktion 52, Bauartfaktoren 53, Antriebstyp 54, etc. herangezogen. Aufgrund der Vielzahl unterschiedlicher Funktionen 52, Bauartfaktoren 53 und Antriebstyp 54, z. B. elektrisch, magnetisch, hydraulisch, pneumatisch, etc., ergibt sich eine hierarchische, baumartige Struktur. Beim Traversieren der baumartigen Struktur entsprechend der Art der betrachteten Armatur ergibt sich schließlich eine Gruppe (A, B, C, D) von Armaturen, die sich jeweils durch gleiche oder im Rahmen vorgegebener Kriterien ausreichend ähnliche Funktion 52, Bauart 53 und Antrieb 54 auszeichnen. Die Klassifizierung 51 berücksichtigt also die Art der betrachteten Armatur.

In einem zweiten Schritt 60 (Fig. 3) werden die im ersten Schritt 50 festgelegten Gruppen (A, B, C, D) im Hinblick auf den Anwendungsfall der jeweiligen IH-Objekte in einsatzbezogene Gruppen eingeteilt. Für eine solche einsatzbezogene Klassifizierung 61 (Fig. 4) werden, wieder am Beispiel von Armaturen als IH-Objekten, Kriterien wie das die Armatur durchströmende Medium 62 sowie der Einsatzbereich 63, also Umgebungseinflüsse und dergleichen, berücksichtigt. Für die einsatzbezogene Klassifizierung 61 werden also die Prozessgrößen (Medium, etc.) und die Einsatzbereiche (Umgebung, etc.) herangezogen. Jeder einsatzbezogenen Gruppe ist ein Objekt-Vergleichs-Index (OVI) zugeordnet, der bei Armaturen analog auch als Armaturen-Vergleichs-Index (AVI) bezeichnet wird. Der Objekt-Vergleichs-Index (OVI) gehört zu den Stammdaten jedes IH-Objektes oder einer Gruppe von IH-Objekten. Der Objekt-Vergleichs-Index (OVI) ist entweder als Konstante vorgegeben, wobei Erfahrungswerte und dergleichen in dessen Ermittlung eingeflossen sind. Alternativ kann auch vorgesehen sein, dass der Objekt-Vergleichs-Index (OVI) ausgehend von einem Vorgabewert, der wie bei einem konstanten Objekt-Vergleichs-Index (OVI) auf Erfahrungswerten basieren kann, veränderlich ist, wobei der Objekt-Vergleichs-Index (OVI) insbesondere anhand von Objekt-Anfälligkeits-Indizes (OAI) gleicher, ähnlicher oder zur gleichen Gruppe gehöriger IH-Objekte stetig oder periodisch aktualisiert wird.

Ab einem dritten Schritt 70 (Fig. 3) beginnt eine Berücksichtigung aktueller, von jeweiligen Einsatz- oder Anwendungsfall abhängiger Einflussfaktoren des jeweiligen IH-Objektes (der Armatur). Im dritten Schritt 70 wird dazu für einzelne vorgegebene oder vorgebbare Einflussparameter deren Gewichtung, d. h. deren Einfluss auf die Störungsanfälligkeit des IH-Objektes, festgelegt. Als Einflussparameter kommen bei einer Armatur als IH-Objekt z. B. das an der Armatur anstehende Druckgefälle, das die Armatur durchströmende Medium, der Umgebungseinfluss, die verwendete Dichtung, etc. in Betracht. Jedem der Einflussparameter ist ein vorgegebener oder vorgebbarer Gewichtungsfaktor zugeordnet. Die Summe der Gewichte der Einflussparameter ergibt bei deren Ausdruck als prozentualer Wert 100 %.

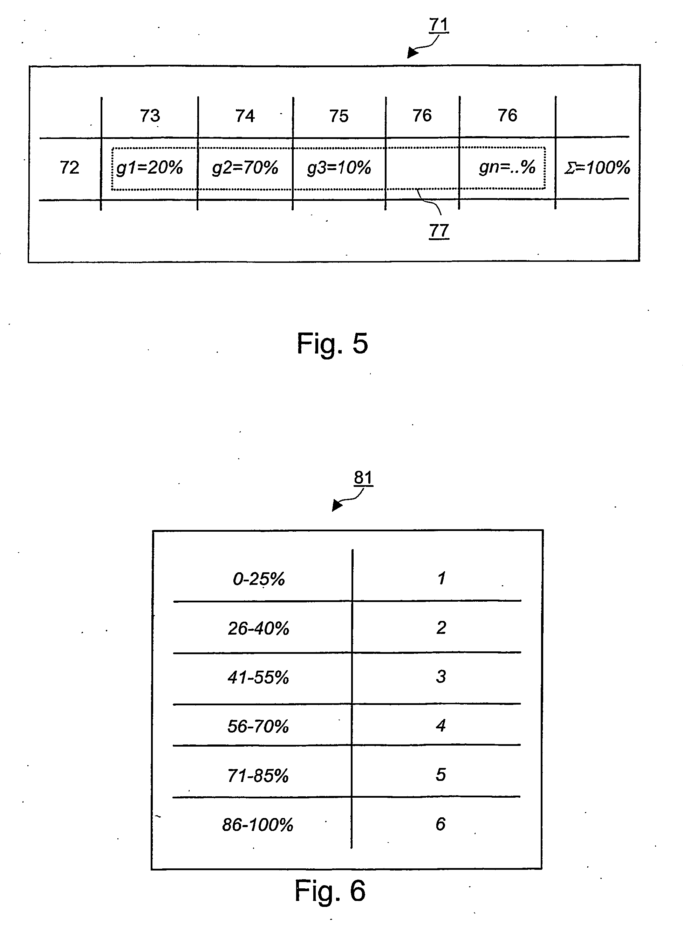

Dazu ist in Fig. 5 exemplarisch eine Einflussparametertabelle 71 mit einer Gewichtungszeile 72 und Spalten 73, 74, 75, 76, die einzelnen Einflussparametern zugeordnet sind, dargestellt. Dabei ist eine erste Spalte 73 dem Einflussparameter "Druckgefälle", eine zweite Spalte 74 dem Einflussparameter "Medium", eine dritte Spalte 75 dem Einflussparameter "Umgebung" sowie weitere Spalten 76 weiteren Einflussparametern, wie z. B. "Dichtung" usw., zugeordnet. Jeder Einflussparameter fließt mit einem unterschiedlichen Gewicht $g_1, g_2, g_3,..., g_n$ in die Bewertung der Störungsanfälligkeit des IH-Objektes ein. Als weitere Einflussparameter sind ggf. z. B. das Alter, die Betriebszeit, eine Anzahl von Schaltspielen sowie ein Wirkleistungsverlauf des IH-Objektes sinnvoll.

Die Gesamtheit der jeweiligen Gewichte oder Gewichtungsfaktoren/-werte kann in einem Gewichtungsvektor g 77 zusammengefasst werden:

$$g = \begin{pmatrix} g1 \\ g2 \\ g3 \\ \vdots \\ gn \end{pmatrix}$$

In einem vierten Schritt 80 (Fig. 3) wird für jeden der Einflussparameter eine Normierungsskala 81 (Fig. 6) generiert.

Dazu ist in Fig. 6 exemplarisch eine Normierungsskala 81 für den Einflussparameter "Umgebung" dargestellt. Jede Normierungsskala 81 ist als LookUp-Tabelle ausgeführt. Das heißt, jeder theoretisch mögliche Wert des jeweiligen Einflussparameters kann eindeutig genau einem Eintrag der LookUp-Tabelle zugeordnet werden. Für den Einflussparameter "Umgebung", bei dem im dargestellten vereinfachten Fall nur die Luftfeuchtigkeit berücksichtigt wird, umfasst die Normierungsskala 81 Zahlenwerte für Luftfeuchtigkeitsbereiche. Einer Luftfeuchtigkeit im Bereich von 0-25 % ist durch die Normierungsskala 81 also der Zahlenwert "1" zugeordnet; einer Luftfeuchtigkeit im Bereich von 56-70 % ist durch die Normierungsskala 81 entsprechend der Zahlenwert "4" zugeordnet, usw. Die Normierungsskala 81 muss nicht notwendig Zahlenwerte umfassen. Für den Einflussparameter "Medium" kann z. B. vorgesehen sein, dass aufgrund einer entsprechenden Normierungsskala 81 (nicht separat dargestellt) folgende Normierung festgelegt ist: ({"Oel": "1"}; {"Wasser": "2"}; ...; {"Luft": "6"}). Des Weiteren ist weder erforderlich, dass die Normierungswerte, also die Zahlenwerte ganzzahlige Werte sind, die in der Normierungsskala monoton steigend angeordnet sind. Auch die Begrenzung auf Zahlenwerte von "1" bis "6" ist im dargestellten Beispiel willkürlich gewählt.

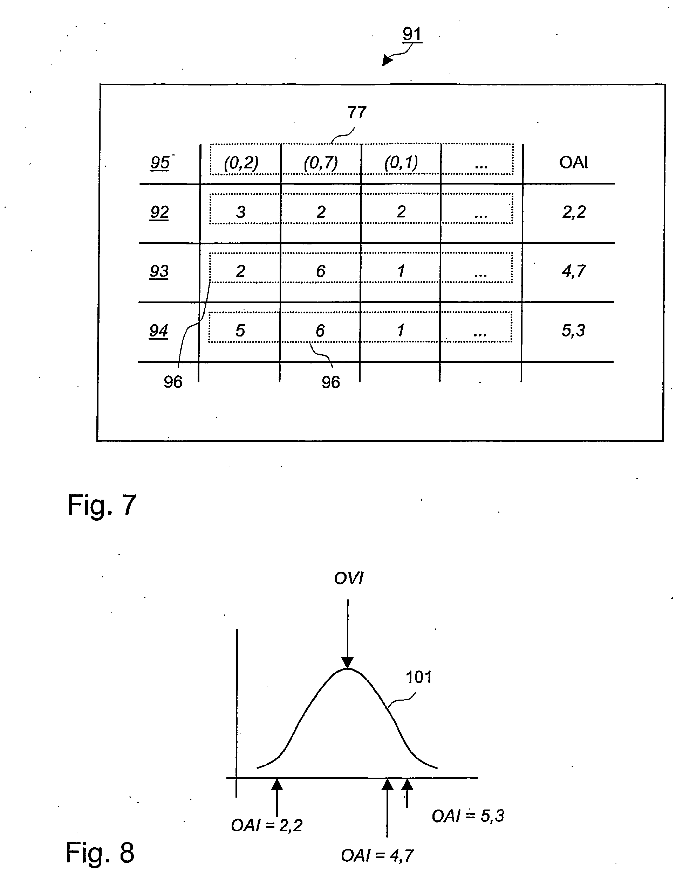

In einem fünften Schritt 90 (Fig. 3) erfolgt dann eine Bewertung sämtlicher betrachteter IH-Objekte. Dazu ist in Fig. 7 in einer Anfälligkeitstabelle 91 exemplarisch eine Gruppe von IH-Objekten dargestellt, die jeweils durch eine Zeile 92, 93, 94 in dieser Anfälligkeitstabelle 91 repräsentiert sind.

In eine Kopfzeile 95 der Anfälligkeitstabelle 91 wird der Gewichtungsvektor 77 aus der Einflussparametertabelle 71 übernommen. In jeder einem IH-Objekt zugeordneten Zeile 92-94 stehen die sich aufgrund der Momentanwerte der Einflussfaktorren bei Berücksichtigung der jeweiligen Normierungsskala 81 ergebenen Zahlenwerte. Dazu werden die Momentanwerte, d. h. aktuelle Messwerte in Form gemessener oder in sonst geeigneter Weise erfasste Zustandsdaten 19 (Fig. 1) oder die letzten zur Verfügung stehenden Daten, herangezogen und anhand einer jeweils zugeordneten Normierungsskala 81 normiert. Die normierten Zahlenwerte entsprechen den Elementen A1, A2, .. An eines Bewer- tungsvektors A 96:

$$A = \begin{pmatrix} A1 \\ A2 \\ A3 \\ \vdots \\ An \end{pmatrix}$$

Für jedes IH-Objekt wird jedes Element der einzelnen Bewertungsvektoren $A$ 96 mit dem der jeweiligen Spalte des Elements anhand des Inhalts der Kopfzeile 95 zugeordneten Gewichtungsfaktor multipliziert. Die jeweiligen Resultate werden anschließend addiert. Mathematisch entspricht diese einer Skalarmultiplikation jedes Bewertungsvektors $A$ 96 mit dem Gewichtungsvektor $g$ 77. Das Resultat dieser Operation ist ein Skalar, also ein Zahlenwert, der als Objekt- Anfälligkeits-Index (OAI) bezeichnet wird:

$$\begin{pmatrix} g1 \\ g2 \\ g3 \\ g4 \end{pmatrix} \cdot \begin{pmatrix} A1 \\ A2 \\ A3 \\ A4 \end{pmatrix} = OAI$$

Das Multiplizieren und anschließende Addieren der einzelnen Zahlenwerte kann mathematisch auch als Matrizenmultiplikation ausgedrückt werden. Dazu wird aus dem Gewichtungsvektor $g$ 77, also dem Inhalt der Gewichts- oder Kopfzeile 72, 95, eine Zeilenmatrix, d. h. eine Matrix mit nur einer Zeile und aus dem das jeweilige IH-Objekt repräsentierenden Bewertungsvektor $A$ 96, also dem Inhalt einer der Zeilen 92-94, eine Spaltenmatrix, d. h., eine Matrix mit nur einer Spalte gebildet:

$$\begin{bmatrix} g1 & g2 & g3 & g4 \end{bmatrix} \begin{bmatrix} A1 \\ A2 \\ A3 \\ A4 \end{bmatrix} = OAI$$

Beide dargestellten mathematischen Operationen sind identisch, weil die Matrizenmultiplikation einer Zeilenmatrix mit einer Spaltenmatrix mathematisch dem Skalarprodukt der zugrunde liegenden Vektoren entspricht:

$$\begin{bmatrix} g1 & g2 & g3 & g4 \end{bmatrix} \begin{bmatrix} A1 \\ A2 \\ A3 \\ A4 \end{bmatrix} \equiv \begin{pmatrix} g1 \\ g2 \\ g3 \\ g4 \end{pmatrix} \cdot \begin{pmatrix} A1 \\ A2 \\ A3 \\ A4 \end{pmatrix}$$

Im Falle von untereinander abhängigen Einflussparametern, z. B. bei einer Abhängigkeit der Störungsanfälligkeit von der Kombination der Einflussparameter "Druckgefälle" und Medium", können Koppelfaktoren $k$ berücksichtigt werden. Der Gewichtungsvektor $g$ 77 oder die korrespondierende Spaltenmatrix mit den Gewichten $(g1,..,gn)$ wird dann als Diagonalmatrix geschrieben, d. h., die Gewichte werden in der Hauptdiagonale einer quadratischen Matrix eingetragen:

$$\begin{bmatrix} g1 & 0 & 0 & 0 \\ 0 & g2 & 0 & 0 \\ 0 & 0 & g3 & 0 \\ 0 & 0 & 0 & g4 \end{bmatrix}$$

Jeder Gewichtungswert ist genau einem Einflussparameter zugeordnet. Der jeweilige Einflussparameter legt die Position des Gewichtungswertes in der Matrix fest. Bei einer Abhängigkeit einzelner Einflussfaktoren untereinander wird ein Koppelfaktor k in der Zeile des ersten Einflussparameters und in der Spalte des abhängigen Einflussparameters eingetragen, nachfolgend am Beispiel eines Koppelfaktors k1 gezeigt:

$$M = \begin{bmatrix} g1 & k1 & 0 & 0 \\ 0 & g2 & 0 & 0 \\ 0 & 0 & g3 & 0 \\ 0 & 0 & 0 & g4 \end{bmatrix}$$

Aus dem Gewichtungsvektor *g* 77 wird damit eine Gewichtungs-/Koppelmatrix *M*. Der Objekt-Anfälligkeits-Index (OAI) wird dann auf Basis einer Matrizenmultiplikation ermittelt, die zunächst einen Parameter-Anfälligkeits-Vektor *PA* ergibt:

$$\begin{bmatrix} g1 & k1 & 0 & 0 \\ 0 & g2 & 0 & 0 \\ 0 & 0 & g3 & 0 \\ 0 & 0 & 0 & g4 \end{bmatrix} \begin{bmatrix} A1 \\ A2 \\ A3 \\ A4 \end{bmatrix} = \begin{bmatrix} PA1 \\ PA2 \\ PA3 \\ PA4 \end{bmatrix} = PA$$

Der Objekt-Anfälligkeits-Index (OAI) ergibt sich dann als Summe der einzelnen Elemente des Parameter-Anfälligkeits-Vektor *PA*, der Parameter-Anfälligkeiten PA1..PAn:

$$OAI = \sum_{i=1..n} PA\,i$$

Als Ergebnis dieser Operation oder einer der beiden anderen vorbeschriebenen Operationen ergibt sich der Objekt-Anfälligkeits-Index (OAI), der im Falle von Armaturen als IH-Objekten auch als Armaturen-Anfälligkeits-Index (AAI) bezeichnet wird.

Für die IH-Objekte, die durch die Zeilen 92-94 repräsentiert sind, ergeben sich Objekt-Anfälligkeits-Indizes (OAI) von "2,2", "4,7" und 5,3".

In einem sechsten Schritt 100 (Fig. 3) wird eine Bewertung sämtlicher IH-Objekte im Hinblick auf deren Instandhaltungsbedarf durchgeführt. Dies erfolgt anhand der ermittelten Objekt-Anfälligkeits-Indizes (OAI).

Jeder ermittelte Objekt-Anfälligkeits-Index (OAI) wird in Relation zu dem Objekt-Vergleichs-Index (OVI) gesetzt.

Dazu ist in Fig. 8 eine Normalverteilung einer Vielzahl von Objekt-Anfälligkeits-Indizes (OAI) dargestellt. Auf der Abszisse ist dabei der Objekt-Anfälligkeits-Index (OAI) und auf der Ordinate die Anzahl der IH-Objekte mit dem jeweiligen Objekt-Anfälligkeits-Index (OAI) abgetragen. Es ergibt sich eine so genannte Glockenkurve 101. Anhand der Symmetrieachse der Glockenkurve 101 kann der Objekt-Vergleichs-Index (OVI) ermittelt werden. Für IH-Objekte mit einem Objekt-Anfälligkeits-Index (OAI) unterhalb des Objekt-Vergleichs-Indexes (OVI) ergibt sich, dass das IH-Objekt unterdurchschnittlich anfällig ist. Entsprechend ist ein IH-Objekt mit einem Objekt-Anfälligkeits-Index (OAI) oberhalb des Objekt-Vergleichs-Indexes (OVI) überdurchschnittlich anfällig. Das heißt, durch diese Einordnung ist eine relative Beurteilung der Anfälligkeit jedes IH-Objektes, also z. B. jeder Armatur, zum Gruppendurchschnitt möglich.

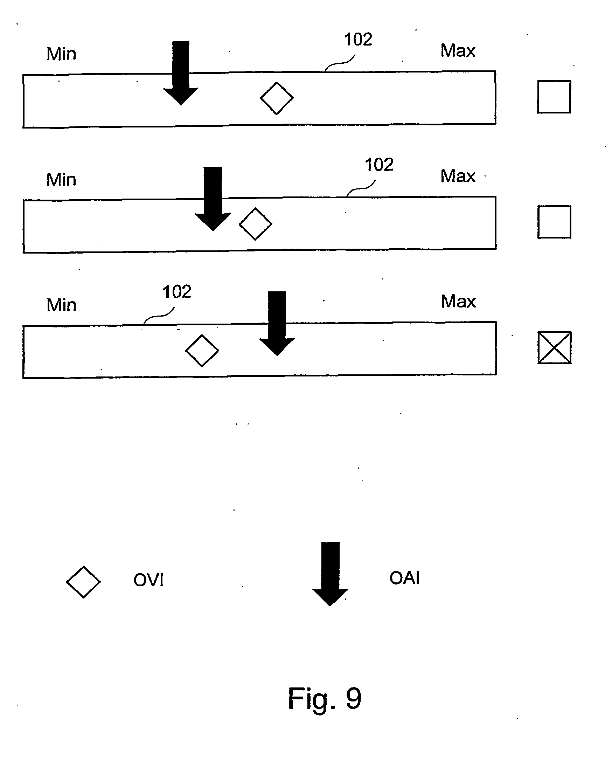

In Fig. 9 ist dazu eine mögliche Bildschirmdarstellung gezeigt. Die Bildschirmdarstellung umfasst exemplarisch drei Skalen 102 zur Darstellung jeweils eines IH-Objektes. In jeder Skala 102 ist graphisch der Objekt-Vergleichs-Index (OVI) - durch eine Raute - und der Objekt-Anfälligkeits-Index (OAI) - durch einen Blockpfeil - eingetragen. Liegt der Objekt-Anfälligkeits-Index (OAI) oberhalb des Objekt-Vergleichs-Indexes (OVI), wie dies bei der dritten Skala 102 der Fall ist, ist das jeweilig IH-Objekt für eine unmittelbare Wartung oder zur Berücksichtigung bei der Planung zukünftiger Wartungsarbeiten zu berücksichtigen. Es ist auch die bereits erwähnte Ampeldarstellung denkbar, wobei bei einem Objekt-Anfälligkeits-Index (OAI) oberhalb des Objekt-Vergleichs-Indexes (OVI) die rote Lampe, bei einem Objekt-Anfälligkeits-Index (OAI) im Bereich des Objekt-Vergleichs-Indexes (OVI) die gelbe Lampe und bei einem Objekt-Anfälligkeits-Index (OAI) unterhalb des Objekt-Vergleichs-Indexes (OVI) die grüne Lampe einer solchen Ampel aktiviert wurden. Je nach aktivierter Lampe ergibt sich z. B. eine Priorisierung des Handlungsbedarfs (also z. B. rot: sofort; gelb: im normalen Turnus; grün: aufgeschoben) oder ein unterschiedlich langer Zeitraum der Instandhaltungsintervalle (also z. B. rot: in jedem Turnus; gelb: in jedem dritten Turnus; grün: in jedem zehnten Turnus).

Die Instandhaltungsoptimierung wird durch folgende Auswertungen unterstützt:

- Ableiten einer zusammenfassenden Ampelaussage zum angetroffenen Zustand,
- Ermittlung einer Terminempfehlung gemäß einer Verschleißprognose für einen Zustandsindikator,
- Übertragung neuer Erkenntnisse auf ähnlich zu beurteilende Instandhaltungsobjekte.

Bezugszeichenliste

[>>2]

| | |
|---|---|
| 1 | technisches System (IH-Anlage) |
| 2 | Behälter |
| 3 | Ablauf |
| 4 | Zulauf |
| 5, 6 | Ventile |
| 7 | Flüssigkeitsspiegel |
| 8 | Messwertaufnehmer |
| 10 | Instandhaltungssystem |
| 11 | Regular-Modul, R-Modul |
| 13 | Condition Based Maintenance-Modul, CBM-Modul |
| 15 | Befund-Modul, B-Modul |
| 17 | R-Modul-Eingangsdaten |
| 19 | CBM-Modul-Eingangsdaten |
| 21 | B-Modul-Eingangsdaten |
| 23 | Maintenance Decision Support-Modul, MDS-Modul |
| 25 | (Instandhaltungs-)Empfehlung |
| 27 | Wissensmanagementmodul, WM-Modul |
| 29 | Hersteller |
| 31 | Serviceprovidem |
| 33 | Anlage |
| 35 | Wissenserweiterung |
| 37 | Wissensnutzung |
| 39 | Wissenserfassung |
| 41 | Instandhaltungsdatenbank |
| 50 | erster Verfahrensschritt |
| 51 | funktionsbezogene Klassifizierung |
| 52 | Kriterium: Funktion |
| 53 | Kriterium: Bauartfaktoren 53 |
| 54 | Kriterium: Antriebstyp 54 |
| 60 | zweiter Verfahrensschritt |
| 61 | einsatzbezogene Klassifizierung |
| 62 | Kriterium: Medium |
| 63 | Kriterium: Einsatzbereich |
| 70 | dritter Verfahrensschritt |
| 71 | Einflussparametertabelle |
| 72 | Gewichtungszeile |
| 73, 74, 75, 76 | Spalten |
| 77 | Gewichtungsvektor $g$ |
| 80 | vierter Verfahrensschritt |
| 81 | Normierungsskala |
| 90 | fünfter Verfahrensschritt |
| 91 | Anfälligkeitstabelle |
| 92, 93, 94 | Zeilen |
| 95 | Kopfzeile |
| 96 | Bewertungsvektor $A$ |
| 100 | sechster Verfahrensschritt |
| 101 | Glockenkurve |

| 102 | Skala |
| *A* | Bewertungsvektor 96 |
| *g* | Gewichtungsvektor 77 |
| *k* | Koppelfaktor |
| *M* | Gewichtungs-/Koppelmatrix |
| PA | Parameter-Anfälligkeits-Vektor |

**Patentansprüche**

1. Verfahren zur automatischen Ableitung von Instandhaltungsempfehlungen (25) für eine technische Anlage (1) mit einer Anzahl von Instandhaltungsobjekten, wobei ein Instandhaltungsbedarf für zumindest eines der Instandhaltungsobjekte anhand von gemessenen Zustandsdaten ermittelt wird, **dadurch gekennzeichnet, dass** für die Ermittlung des Instandhaltungsbedarfs zusätzlich zu den Zustandsdaten wissensbasierte Daten herangezogen werden, die durch einen Vergleich eines Objekt-Anfälligkeits-Index (OAI) des Instandhaltungsobjekts mit einem Objekt-Vergleichs-Index (OVI), der für vergleichbare Instandhaltungsobjekte gewonnen wurde, ermittelt werden.

2. Verfahren nach Anspruch 1, wobei der Objekt-Anfälligkeits-Index (OAI) durch logische Verknüpfung eines dem Instandhaltungsobjekt zugeordneten Bewertungsvektors (*A*) mit einem zugeordneten Gewichtungsvektor (*g*) ermittelt wird.

3. Verfahren nach Anspruch 2, wobei die logische Verknüpfung in einer Skalarmultiplikation des Bewertungsvektors (*A*) und des Gewichtungsvektors (*g*) besteht.

4. Verfahren nach Anspruch 2, wobei anstelle des Gewichtungsvektors (*g*) eine Gewichtungsmatrix (*M*) verwendet wird, bei der die Werte des zugrunde liegenden Gewichtungsvektors (*g*) in der Hauptdiagonale angeordnet sind, wobei in der Nebendiagonale der Gewichtungsmatrix (*M*) mindestens ein Koppelfaktor (*k*) eingetragen wird, und wobei die mathematische Verknüpfung zur Ermittlung des Objekt-Anfälligkeits-Indexes (OAI) in einer Matrizenmultiplikation der Gewichtungsmatrix (*M*) mit dem Bewertungsvektor (*A*) und einer anschließenden Summation der Elemente einer sich dabei ergebenden Spaltenmatrix, nämlich dem Parameter-Anfälligkeits-Vektor (*PA*), besteht.

5. Verfahren nach einem der Ansprüche 1 bis 4, wobei für ein Instandhaltungsobjekt eine Instandhaltungsempfehlung (25) aus einem Verhältnis von ermitteltem Objekt-Anfälligkeits-Index (OAI) und Objekt-Vergleichs-Index (OVI) abgeleitet wird.

6. Verfahren nach Anspruch 5, wobei die Instandhaltungsempfehlung (25) in einer Modifikation eines dem Instandhaltungsobjekt zugeordneten Instandhaltungsplans (17) anhand des Verhältnisses von Objekt-Anfälligkeits-Index (OAI) und Objekt-Vergleichs-Index (OVI) ermittelt wird.

7. Verfahren nach Anspruch 6, wobei bei der Modifikation des Instandhaltungsplans (17) ein Instandhaltungsbedarf des Instandhaltungsobjektes anhand des Instandhaltungsplans (17) vor der Modifikation berücksichtigt wird.

8. Verfahren nach einem der Ansprüche 1 bis 7, wobei der Objekt-Vergleichs-Index (OVI) einem das Instandhaltungsobjekt repräsentierenden Stammdatensatz oder einem eine Kategorie von Instandhaltungsobjekten repräsentierenden Stammdatensatz zugeordnet ist.

9. Computerprogramm mit Programmcodemitteln, um alle Schritte gemäß einem der Ansprüche 1 bis 8 durchzuführen, wenn das Computerprogramm auf einem Computer ausgeführt wird.

10. Computerlesbarer Datenträger mit einem Computerprogramm gemäß Anspruch 9.

**Claims**

1. A method for the automatic derivation of maintenance recommendations (25) for a technical installation (1) having several maintenance objects, wherein a maintenance need is determined for at least one of the maintenance objects by means of measured status data,

**characterized in that**

for determining the maintenance need, in addition to the status data, knowledge-based data are used, which are ascertained by comparing an object susceptibility index (OAI) of the maintenance object with an object comparison index (OVI), which had been obtained for comparable maintenance objects.

2. The method of claim 1, wherein the object susceptibility index (OAI) is determined by logically linking an evaluation vector (A), associated with the maintenance object, with an associated weighting vector (g).

3. The method of claim 2, wherein the logical linkage consists in a scalar multiplication of the evaluation vector (A) with the weighting vector (g).

4. The method of claim 2, wherein, instead of the weighting vector (g), a weighting matrix (M) is used, in which the values of the underlying weighting vector (g) are arranged in the main diagonal, wherein at least one coupling factor (k) is entered in the secondary diagonal of the weighting matrix (M), and wherein the mathematical linkage for determining the object susceptibility index (OAI) consists in a matrix multiplication of the weighting matrix (M) with the evaluation vector (A) and a subsequent summation of the elements of a column matrix resulting therefrom, namely the parameter susceptibility vector (PA).

5. The method of any of claims 1 to 4, wherein a maintenance recommendation (25) for a maintenance object is derived from a ratio between the determined object susceptibility index (OAI) and the object comparison index (OVI).

6. The method of claim 5, wherein the maintenance recommendation (25) is determined in a modification of a maintenance plan (17) associated with the maintenance object by means of the ratio between the determined object susceptibility index (OAI) and the object comparison index (OVI).

7. The method of claim 6, wherein the modification of the maintenance plan (17) takes into account a maintenance need of the maintenance object by means of the maintenance plan (17) prior to the modification.

8. The method of any of claims 1 to 7, wherein the object comparison index (OVI) is associated with a master data record representing the maintenance object or a master data record representing a category of maintenance objects.

9. A computer program with program-code means to perform all steps according to any of claims 1 to 8, when the computer program is executed on a computer.

10. A computer-readable data carrier with a computer program according to claim 9.

**Revendications**

1. Procédé pour la dérivation automatique de recommandations d'entretien (25) pour une installation technique (1) ayant plusieurs objets d'entretien, dans lequel un besoin d'entretien est déterminé pour au moins un des objets d'entretien à l'aide de données d'état mesurées,
**caractérisé en ce que**
pour déterminer le besoin d'entretien, on utilise, en plus des données d'état, des données basées sur des connaissances, qui sont déterminées en comparant un index de susceptibilité d'objet (OAI) de l'objet d'entretien avec un index de comparaison d'objet (OVI), qui avait été obtenu pour des objets d'entretien comparables.

2. Procédé selon la revendication 1, dans lequel l'index de susceptibilité d'objet (OAI) est déterminé par un enchaînement logique d'un vecteur d'évaluation (A), affécté à l'objet d'entretien, avec un vecteur de pondération (g) affécté.

3. Procédé selon la revendication 2, dans lequel l'enchaînement logique consiste à une multiplication scalaire du vecteur d'évaluation (A) par le vecteur de pondération (g).

4. Procédé selon la revendication 2, dans lequel on utilise, au lieu du vecteur de pondération (g), une matrice de pondération (M), dans laquelle les valeurs du vecteur de pondération (g) prise pour base sont disposées dans la diagonale principale, dans lequel au moins un facteur de couplage (k) est entré dans la diagonale secondaire de la matrice de pondération (M) et dans lequel l'enchaînement mathématique pour déterminer l'index de susceptibilité d'objet (OAI) consiste à une multiplication de matrice de la matrice de pondération (M) par le vecteur d'évaluation (*A*) et une totalisation subséquente des éléments d'une matrice de colonne en résultant, à savoir le vecteur de paramètre de susceptibilité (*PA*).

5. Procédé selon l'une quelconque des revendications 1 à 4, dans lequel une recommandation d'entretien (25) pour un objet d'entretien est dérivée d'un rapport entre l'index de susceptibilité d'objet (OAI) déterminé et l'index de comparaison d'objet (OVI).

6. Procédé selon la revendication 5, dans lequel la recommandation d'entretien (25) est déterminée par une modification d'un plan d'entretien (17) affécté à l'objet d'entretien au moyen du rapport entre l'index de susceptibilité d'objet (OAI) déterminé et l'index de comparaison d'objet (OVI).

7. Procédé selon la revendication 6, dans lequel la modification du plan d'entretien (17) prend en considération un besoin d'entretien de l'objet d'entretien à l'aide du plan d'entretien (17) avant la modification.

8. Procédé selon l'une quelconque des revendications 1 à 7, dans lequel l'index de comparaison d'objet (OVI) est affécté à un enregistrement maître représentant l'objet d'entretien ou à un enregistrement maître représentant une catégorie d'objets d'entretien.

9. Programme d'ordinateur avec des moyens de code programme pour effectuer tous les pas selon l'une quelconque des revendications 1 à 8, lorsque le programme d'ordinateur est exécuté sur un ordinateur.

10. Support de données lisible par ordinateur avec un programme d'ordinateur selon la revendication 9.

Fig. 1

Fig. 2

Fig. 3

Fig. 4

| | 73 | 74 | 75 | 76 | 76 | |
|---|---|---|---|---|---|---|
| 72 | g1=20% | g2=70% | g3=10% | | gn=..% | Σ=100% |

77

## Fig. 5

| 0-25% | 1 |
|---|---|
| 26-40% | 2 |
| 41-55% | 3 |
| 56-70% | 4 |
| 71-85% | 5 |
| 86-100% | 6 |

81

## Fig. 6

_91_

| | | 77 | | | |
|---|---|---|---|---|---|
| _95_ | (0,2) | (0,7) | (0,1) | ... | OAI |
| _92_ | 3 | 2 | 2 | ... | 2,2 |
| _93_ | 2 | 6 | 1 | ... | 4,7 |
| _94_ | 5 | 6 | 1 | ... | 5,3 |

96          96

## Fig. 7

OVI

101

OAI = 2,2          OAI = 5,3

OAI = 4,7

## Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0863490 A

- EP 0661673 A